# EUROPEAN PATENT SPECIFICATION

(11) **EP 3 482 099 B1**
(45) Date of publication and mention of the grant of the patent: **16.12.2020**
(21) Application number: 17734092.4
(22) Date of filing: 29.06.2017
(51) Int. Cl.: F16H 3/66, F16H 63/30, F16H 63/08, B02C 17/24

(54) **CHANGE GEARING PARTICULARLY FOR SHREDDERS**
ÄNDERUNGSGETRIEBE, INSBESONDERE FÜR ZERKLEINERUNGSMASCHINEN
ENGRENAGE DE CHANGEMENT, EN PARTICULIER POUR DÉCHIQUETEUSES

(30) Priority: 11.07.2016 IT 201600072035
(43) Date of publication of application: 15.05.2019
(73) Proprietor: Rota, Fabio Marcello, 20146 Milano (IT)
(72) Inventor: Rota, Fabio Marcello, 20146 Milano (IT)
(74) Representative: Petruzziello, Aldo
(86) International application number: PCT/EP2017/066216
(87) International publication number: WO 2018/010973

(56) References cited:
- JP-A- 2000 193 049
- US-A- 4 621 541
- US-A1- 2014 166 792

## Description

The object of the present invention is a change gearing apt in particular for use in shredders, and a shredder provided with such change gearing.

Although here below specific reference is made to shredders, the principles of the invention apply to any machine where actuation at different speeds is required.

Remaining in the sector of shredders, the operations of shredding consist in reducing mechanically, by means of cutting or crushing, the dimensions of various products, generally waste, to prepare them for subsequent processes.

Given the enormous heterogeneity of the materials to be treated and of the relative processes, the features of the machines used have to be such as to allow in any case a great flexibility of performances in terms of working speed and/or torque as a function of parameters which can substantially change also from one minute to the next.

### Prior art

A very common type of shredder is a machine with two shafts, one known as "fast" with rotation speed usually comprised within a range between 15 and 40 rpm and one known as "slow" with a rotation speed normally equal to approximately 60/70% of that of the fast shaft.

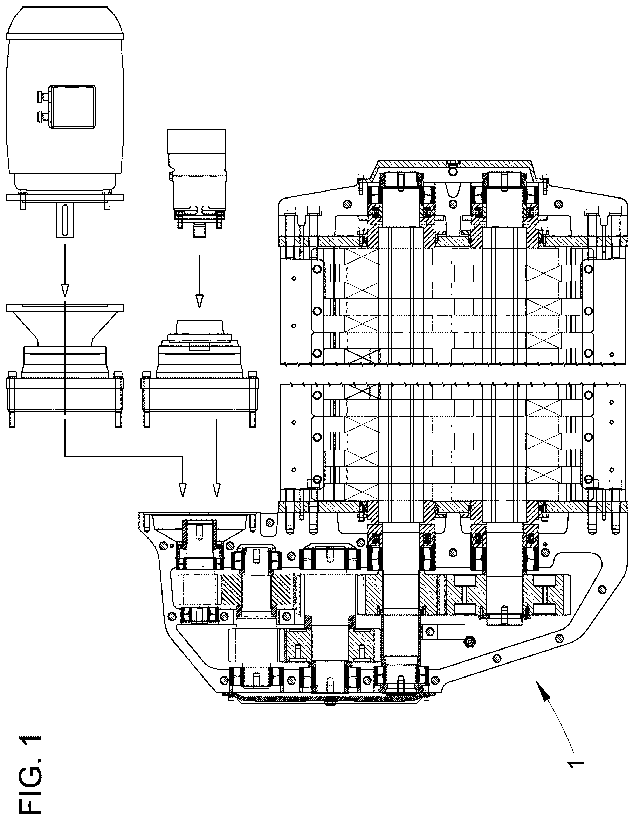

As can be seen from Fig. 1, these are machines made up of two parallel axes (actuated by reduction gears of various types) whereon a plurality of blades are keyed provided with one or more spouts interlayered with spacers so as to have at the corresponding blades mounted on the other shaft spaces appropriately calibrated to ensure the possibility of reciprocal intersection usually with fairly narrow play.

Naturally the need to handle varyingly high hourly quantities of materials or products of various sizes also conditions the dimensions of the machines and therefore usually also the power required to ensure proper working thereof.

Practically all shredders are provided with a system which causes the stopping of the motion and then one or more cycles of reversal of the direction of rotation of the shafts, when the material to be shredded is such, in terms of toughness, hardness or quantity, as to require a shear strength of the teeth of the blades (and correspondingly a necessary torque on the shaft) exceeding the torque available.

This inversion of the direction of rotation causes a "reflux" in the grinding chamber of the material already partially shredded, presenting it to the cutters in a different manner or already slightly pre-processed. Usually this facilitates the subsequent cutting action, allowing work to be continued more easily.

Naturally presences of materials which cannot in fact be shredded can occur: in this case, after a certain number of inversion cycles, the machine blocks and the non-manageable bodies have to be extracted from the hopper.

There are two main types of actuation of the shredders:
- electric with at least one electric motor connected directly by means of a reduction gear to the shafts.
- Hydraulic with an electric motor which actuates a hydraulic pump with variable cylinder capacity which in turn actuates a hydraulic motor connected, by means of a reduction gear, to the shafts.

### Electric actuation

This type of actuation consists, as mentioned above, in an electric motor connected directly or with belts and pulleys to a reduction gear which actuates the grinding parts.

The system, within the limits of the electrical power of the motor, always works at fixed speed but is nevertheless able, in transient overload conditions, to supply up to a maximum torque equal to approximately 2.7 times the rated torque. However this maximum torque and the relative instantaneous "excess power" supplied (also 2.7 times the rated power) can be sustained only for very limited times (seconds not minutes) so as to avoid the intervention of the systems of thermal protection of the motor) and therefore cannot substantially contribute to the productivity of the system.

However this entails that in any case, so as to avoid the superseding of the limits of mechanical strength of the components of the machine, the structural dimensioning of the same has to be carried out by taking as reference the maximum transient torque and the much lower rated working torque.

This means that in the machines with electric actuation, the working speed being fixed and always equal to the maximum, if use is to be made of the entire torque of dimensioning of the machine not only as condition of instantaneous overload but as effective working torque, use would have to be made of a motor with rated power almost three times that effectively installed. As well as prohibitive running costs there would be a situation of serious mechanical problems since, given the great dimensions of such a motor, the rotating parts could generate in the case of sudden blockages very high and extremely dangerous inertia torque.

Therefore, when the work to be carried out foresees the need for high shear torque, reduction gears with high ratio have to be installed which however reduce definitively and structurally the working speed: it is easy to understand that this constitutes an important limit to production performances when processing, as almost always happens, heterogeneous materials, which require shear torque and working speeds that are always fairly variable within wide limits.

### Hydraulic actuation

In practice the system consists of a pump with variable flow rate actuated by a normal electric motor (which works virtually always at rated current and practically never in overload) which feeds a hydraulic motor with fixed (or predetermined) cylinder capacity. This system allows, by the automatic regulation of the flow rate of the pump, the hydraulic motor to be made to rotate at variable speed in order to be able to work continuously at maximum torque always however without absorbing a power higher than the rated one of the electric motor.

In practice it happens that when the blades of the shafts actuated meet the material which has to be cut they transmit a braking resistance via the shafts to the hydraulic motor-reduction gear system. This resistance makes the pressure rise in the hydraulic circuit supplying the motor. In order to be able to supply this pressure moreover the pump should absorb greater power from the electric motor which therefore tends to increase its current absorption.

Until this rise in the current reaches the rated current the system does not have problems in that it is in the nature of every actuation.

When however this level is exceeded, the system is set up to adjust with continuity the flow rate of the pump (decreasing it or increasing it according to needs) so as to supply an actuation power (which is equal at every instant to the product of the pressure in the hydraulic circuit for the flow rate of oil supplied by the pump) practically equal to and not higher than the electrical one available.

This entire system is controlled by an electronic regulator which, detecting continuously the current of the electric motor, makes the instantaneous flow rate of the pump vary so as not to exceed the rated current of the same motor.

All this however has in return some negative aspects which have to be considered and in particular:
- the hydraulic equipment is much costlier than the direct electric type,
- the system is much noisier, and therefore requires adequate soundproofing,
- the hydraulic circuits contain oil at a high temperature and therefore have to be protected for accident prevention reasons,
- the hydraulic actuation system is, with respect to a purely mechanical one, strongly penalised in terms of efficiency, above all when it works at high pressures, because the total efficiency of the system is given by the product of the efficiencies of the single components (pump, hydraulic motor, oil coolers, pipes, various valves, etc.) which in themselves are rather low (typically from 0.7 to 0.85) and which therefore give a total which easily drops below 50%.
- As composed of parts with sophisticated technology they require regular care of management and maintenance with high relative costs,
- the staff assigned to maintenance has to be specialised in the management of hydraulic systems and be fully trained
- in general also from the point of view of maintenance possible spare parts have high costs.

JP 2000 193049 A discloses in its Fig.6 a change gearing, having three reduction stages with ratios different from each other, comprising an outer case, wherein a drive shaft is axially arranged, carrying at least two sun pinions acting on respective sets of planetary gears which engage in corresponding toothed crowns, said set of planetary gears being mounted on planetary gear carriers, rigidly connected to each other, and said toothed crowns can rotate on bearings and carrying, at the outside, disk clutches apt to block alternately the respective toothed crown to the outer case.

US 4621541 A discloses a further change gearing.

US 2014/166792 A1 discloses a planetary transmission for a shredder.

### Object of the invention

The object of the invention is that of eliminating the disadvantages of the prior art described above.

More particularly an object of the invention is that of providing an actuation system for shredders which allows a stepped speed change so as to adapt to the particular material to be shredded.

Another object of the invention is that of providing such a change gearing which has the advantages of structural simplicity and economy of the electric systems and of versatility of the hydraulic systems.

Yet another object of the invention is that of providing such a change gearing which is easy to manoeuvre, also automatically, and highly reliable.

These and other objects of the invention are achieved with the features expressed in the independent claim 1.

Advantageous embodiments of the invention are disclosed by the dependent claims.

Substantially, the change gearing, particularly for shredders according to the invention, with at least two reduction stages with ratios different one from the other, comprises an outer case, axially whereto a drive shaft is placed, carrying at least two sun pinions acting on respective sets of planetary gears, meshing in corresponding toothed crowns, wherein said sets of planetary gears are mounted on planetary gear carriers, rigidly connected one to the other, and said toothed crowns are incorporated and attached in respective shells which can rotate on bearings and carrying, at the outside, disk clutches apt to lock alternately the relative crown carrier shells to the outer case.

### Brief description of the drawings

Further features of the invention will be made clearer by the following detailed description, referred to one of its embodiments purely by way of a non-limiting example, illustrated in the accompanying drawings, in which:
Fig. 1 is a schematic sectioned view of a shredder, with two possible actuations shown detached, respectively of the electric and hydraulic type, according to the prior art, applicable to the input stage;
Fig. 2 is a view like Fig. 1, wherein the actuation of the shredder has been replaced by a gearing with two speeds according to the invention;
Fig. 3 is a more detailed enlarged and sectioned view of the change gearing according to the invention;
Figs. 4 and 5 show schematically the meshings of the clutches of the change gearing of Fig. 3;
Fig. 6 is a plan schematic view of the change gearing showing the actuation lever.
Fig. 7 is a view like that of Fig. 3 of a gearing with three speeds.

### Detailed description of the invention

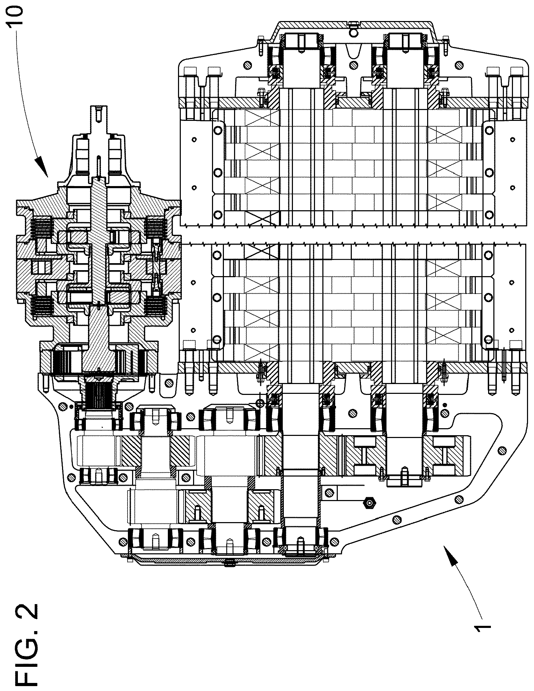

**Figures 1** **and** **2** show schematically a shredder, denoted overall by reference numeral **1**, to be considered in itself known, and therefore not described further.

So as to avoid the negative aspects described previously of the traditional actuation systems (electric and hydraulic) shown in Fig. 1, an actuation system **10** is proposed, shown in **Fig. 2** which, although without reaching the continuous and punctual variation in speed/torque which can be supplied, typical of hydraulic systems, provides, with simple stepped variation (which can be actuated automatically) of the reduction ratios of the reduction gears, for the adapting with sufficient promptness and precision the features of the mechanical actuations of the shafts of the shredders to the operating needs.

The system of actuation according to the invention replaces at least one of the stages of the reduction gear, preferably that of entry to the shredder **1,** structurally smaller for reasons of cost and working functionality.

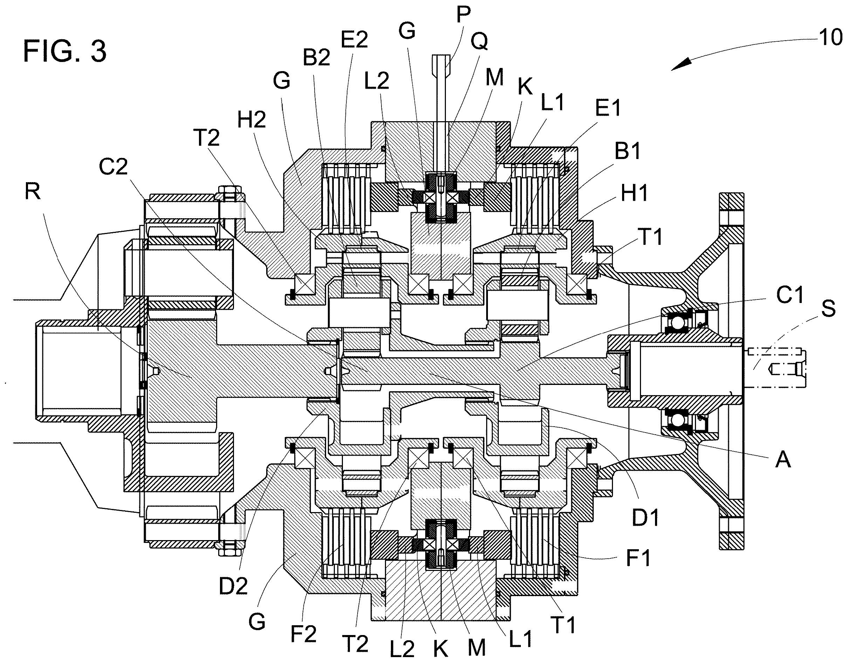

Referring to the section of **Fig. 3** the actuation system according to the invention is now described, which is constituted by a gear assembly **10,** in this case with two speeds, comprising two reduction epicyclic stages with ratios different one from the other (typically one with a ratio one and a half times to twice higher than the other). These stages, by means of the actuation of suitable clutches **F1** and **F2,** which will be described in greater detail here below, have force applied alternately on the successive stages and therefore allow in substance a variation of the total reduction ratio of the actuation with the relative consequences on the working torque and speed of the machine.

In **Fig. 3** with **G** the outer case of a reduction gear has been denoted, axially whereto a drive shaft **A** is placed which carries two gears **C1** and **C2** (normally known as "sun") which go to act on respective sets of gears, known as "planetary" **B1** and **B2** which are part of the two epicyclic reduction assemblies which make up the gear assembly **10.**

The shaft **A** is connected to an electric drive motor (not shown) by means of an appropriate joint **S** or by an appropriate assembly of pulleys and belts.

It is pointed out that the so-called planetary gear carriers **D1** and **D2** are rigidly connected one to the other and always move as a single component.

The external crowns of the reduction gears **E1** and **E2**, which are normally attached to the case **G** of the reduction gears as they act as a fixed point of reaction for the thrusts caused by the gears of each single assembly, according to the invention are instead incorporated and attached in respective shells **H1** and **H2** which can rotate on bearings **T1** and **T2** and which carry outside appropriate teeth whereon adequate disk clutches **F1** and **F2** are mounted.

These clutches **F1** and **F2** have the object of locking alternately (when "alternately" they are closed) to the outer case **G** the relative crown carrier shells **H1** and **H2.** In this way, when a crown cannot rotate with respect to the case, because it is attached thereto by its clutch, it provides an adequate reaction to the loads transmitted by the planetary gears, while the other one which is not attached by its clutch to the case can rotate freely and does not supply any reaction to the action of its planetary gears, instead it is held by the latter in "idle" rotation.

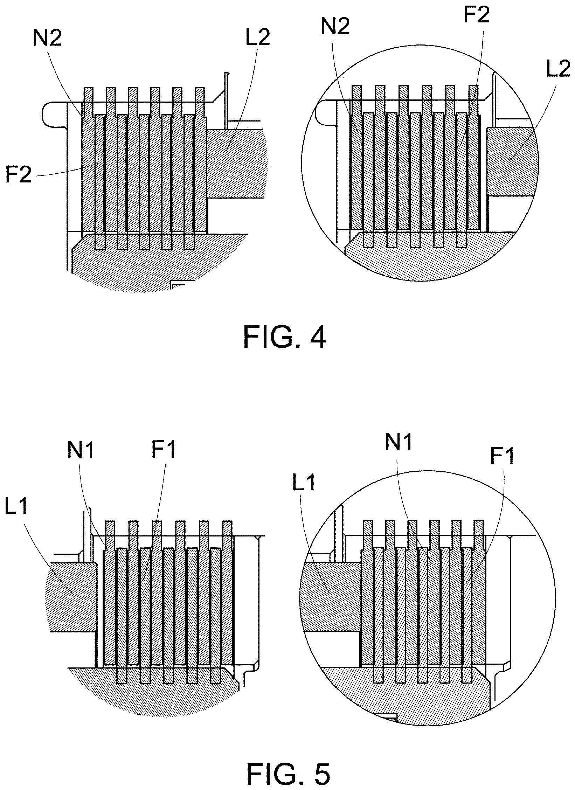

The activation of one or the other clutch **F1** and **F2** takes place (in this non-exclusive representation) by means of a mechanical action of compression by a ring **M** concentric to the axis of the reduction gear, which, by means of appropriate wheels **K,** rotating through an adequate angle around the axis of the reduction gear, presses on adequate cams **L1** and **L2** embedded in clutch pressing rings **N1** and **N2** integral with the outer case **G,** as shown in the details of **Figures 4 and 5****.**

Other different and known solutions of actuation of the clutches of the electromagnetic, hydraulic or mechanical type can in any case be provided.

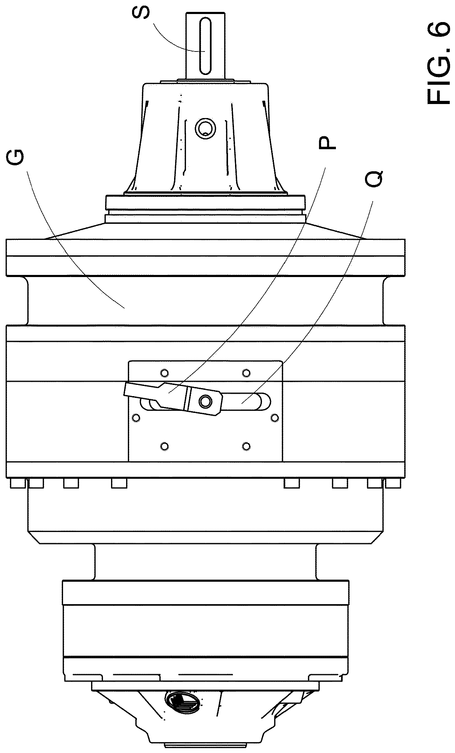

In this specific solution, as shown in **Fig. 3****,** the actuation of the ring **M** takes place by acting on a lever **P** which projects from the outer case **G** through an appropriate slot **Q** (see in particular **Fig. 6**): three positions of the ring and correspondingly of the lever **P** are provided, corresponding to the three following conditions:
- **"Idle",** i.e. none of the two clutches **F1** and **F2** is locked and therefore the two crowns **E1** and **E2** with the respective shells **H1** and **H2** are disconnected from the outer case **G,** therefore they can rotate free without giving any reaction to the relative planetary gears **B1** and **B2.** In these conditions the electric motor rotates but no torque is transmitted to the shafts of the shredder.
- **"Slow functioning".** The reduction ratio of this epicyclic is higher. In this case the clutch **F2** is locked while the **F1** is free. The shell **H2** and the relative crown **E2** are locked with respect to the outer case **G** providing adequate reaction to the thrusts of the planetary gears **B2** and therefore the higher drive torque is transmitted by the planetary gears carrier **D2** to the gear **R** of the successive epicyclic stage of the reduction gear. Since the reduction ratio is higher, the speed of rotation is lower. It is observed that the shell **H1** with the relative crown **E1** rotate free, simply driven by internal wheel mechanisms but without transmitting any torque.
- **"Fast functioning".** The reduction ratio of this epicyclic is lower. In this case the clutch **F1** is locked while the **F2** is free. The shell **H1** and the relative crown **E1** are locked with respect to the outer case **G** providing adequate reaction to the thrusts of its planetary gears **B1** and therefore a lower drive torque is transmitted by the planetary gears carrier **D1** to the gear **R** of the successive epicyclic stage of the reduction gear. Since the reduction ratio is lower, the speed of rotation transmitted to the rest of the reduction gear is higher. It is observed that the shell **H2** with the relative crown **E2** rotate free, simply driven by internal wheel mechanisms but without transmitting any torque.

The actuation of the lever **P,** which can be carried out with hydraulic, pneumatic or mechanical systems (e.g. with ball recirculation screws or hydraulic pistons or others), is controlled by an appropriate electronic regulator which, assuming as reference magnitude the electrical absorption of the motor, actuates alternate lockings of the clutches in order to avoid that unacceptable overloads occur and on the other hand adjusting the speed of the grinding parts to requests for use instant by instant.

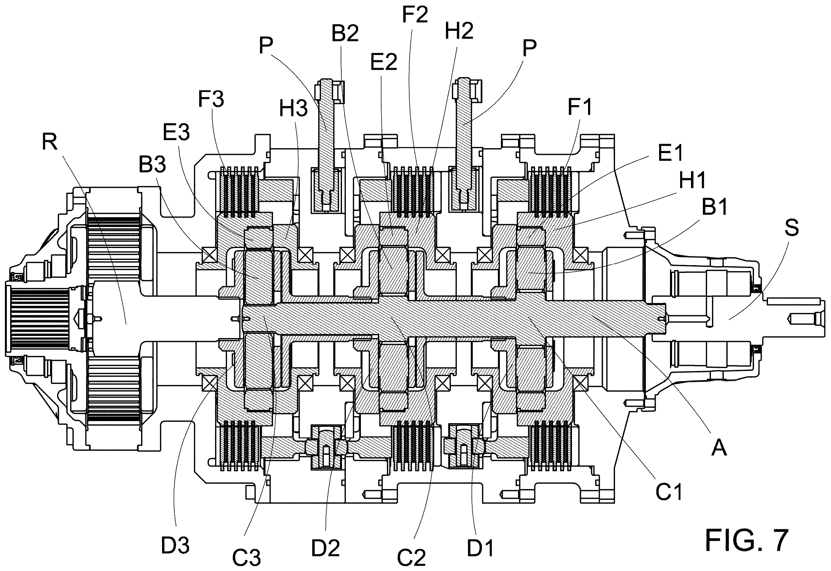

The system described refers to the simpler solution with **one** single step of speed actuated by acting on only **one** reduction stage, but it can also be easily foreseeable that it is possible to act by replicating the same mode on two successive stages of the reduction gear or, as can be seen in **Fig. 7**, incorporating in the gear assembly **10** input shafts with two different sun pinions **C1**, **C2**, **C3**, with relative planetary gears **B1, B2, B3** contained in planetary gears carriers **D1, D2, D3** integral one with the other and relative reaction crowns **E1, E2, E3** contained each one in its own rotating shell HI, **H2, H3** lockable, as described above, with its own specific clutch **F1, F2, F3** to the outer case **G** so as to allow a wider selection of speed ratios available. In this way, with appropriate combinations of actuation of the different clutches, the number of steps of speed (and correspondingly of torque) selectable is expanded.

Naturally the invention is not limited to the particular embodiment described previously and illustrated in the accompanying drawings, but numerous detail changes may be made thereto, within the reach of the person skilled in the art, without thereby departing from the scope of the same invention, as defined in the appended claims.

## Claims

1. A change gearing **(10)** particularly for shredders **(1),** having at least two reduction stages with ratios different from each other, comprising an outer case **(G),** wherein a drive shaft **(A)** is axially arranged, carrying at least two sun pinions **(C1, C2)** acting on respective sets of planetary gears **(B1, B2)** which engage in corresponding toothed crowns **(E1, E2),** said set of planetary gears **(B1, B2)** being mounted on planetary gear carriers **(D1, D2),** rigidly connected to each other,
**characterized in that** said toothed crowns **(E1, E2)** are embedded and fixed to respective shells **(H1, H2)** which can rotate on bearings **(T1, T2)** and carries, at the outside, disk clutches **(F1, F2)** apt to block alternately the respective shells **(H1, H2)** to the outer case **(G).**

2. A change gearing according to claim 1, wherein said clutches **(F1, F2)** are electromagnetically, hydraulically or mechanically actuated.

3. A change gearing according to claim 1, wherein said planetary gear carriers **(D1, D2)** which are rigidly connected to each other, transmit the drive torque to a gear **(R)** of a next epicyclic stage of the reduction gear.

4. A change gearing according to claim 1, wherein said shaft **(A)** is connected to an electric drive motor by means of a joint **(S)** or by a group of pulleys and belts.

5. Shredder **(1)** comprising a change speed gearing **(10)** according to any of the preceding claims.

## Patentansprüche

1. Änderungsgetriebe (10), insbesondere für Zerkleinerungsmaschinen (1), mit zumindest zwei Reduktionsstufen mit Verhältnissen, die voneinander abweichen, umfassend ein Außengehäuse (G), wobei eine Antriebswelle (A) axial angeordnet ist, die zumindest zwei Sonnenräder (C1, C2) trägt, welche auf jeweilige Sätze von Planetenrädern (B1, B2) einwirken, die in entsprechenden Zahnkränzen (E1, E2) in Eingriff treten, wobei der Satz von Planetenrädern (B1, B2) an Planetenradträgern (D1, D2) angebracht ist, die starr miteinander verbunden sind,
**dadurch gekennzeichnet, dass** die Zahnkränze (E1, E2) in jeweiligen Schalen (H1, H2) eingebettet und befestigt sind, die auf Lagern (T1, T2) drehen können, und auf der Außenseite Scheibenkupplungen (F1, F2) tragen, welche zum abwechselnden Blockieren der jeweiligen Schalen (H1, H2) am Außengehäuse (G) geeignet sind.

2. Änderungsgetriebe nach Anspruch 1, wobei die Kupplungen (F1, F2) elektromagnetisch, hydraulisch oder mechanisch betätigt werden.

3. Änderungsgetriebe nach Anspruch 1, wobei die Planetenradträger (D1, D2), die starr miteinander verbunden sind, das Antriebsmoment auf ein Rad (R) einer nächsten epizyklischen Stufe des Reduktionsgetriebes übertragen.

4. Änderungsgetriebe nach Anspruch 1, wobei die Welle (A) mittels einer Verbindung (S) oder durch eine Gruppe von Riemenscheiben und Riemen mit einem elektrischen Antriebsmotor verbunden ist.

5. Zerkleinerungsmaschine (1), umfassend ein Änderungsgetriebe (10) nach einem der vorhergehenden Ansprüche.

## Revendications

1. Engrenage de changement (10), en particulier pour des déchiqueteuses (1), comportant au moins deux étages de réduction avec des rapports différents l'un de l'autre, comprenant un boîtier extérieur (G), dans lequel un arbre d'entraînement (A) est agencé axialement, portant au moins deux pignons solaires (C1, C2) agissant sur des ensembles respectifs d'engrenages planétaires (B1, B2) s'engageant dans des couronnes dentées (E1, E2) correspondantes, ledit ensemble d'engrenages planétaires (B1, B2) étant monté sur des supports d'engrenages planétaires (D1, D2) reliés l'un à l'autre de façon rigide,
**caractérisé en ce que** lesdites couronnes dentées (E1, E2) sont incorporées et fixées dans des coquilles (H1, H2) respectives, lesquelles peuvent tourner sur des paliers (T1, T2) et portent, du côté extérieur, des embrayages à disque (F1, F2) aptes à bloquer alternativement les coquilles (H1, H2) respectives sur le boîtier extérieur (G).

2. Engrenage de changement selon la revendication 1, dans lequel lesdits embrayages (F1, F2) sont actionnés de façon électromagnétique, hydraulique ou mécanique.

3. Engrenage de changement selon la revendication 1, dans lequel lesdits supports d'engrenages planétaires (D1, D2) reliés l'un à l'autre de façon rigide transmettent le couple d'entraînement à un engrenage (R) d'un étage épicycloïdal suivant de l'engrenage de réduction.

4. Engrenage de changement selon la revendication 1, dans lequel ledit arbre (A) est relié à moteur d'entraînement électrique à l'aide d'un joint (S) ou d'un groupe de poulies et de courroies.

5. Déchiqueteuse (1) comprenant un engrenage de changement de vitesse (10) selon l'une quelconque des revendications précédentes.
